(19) Europäisches Patentamt / European Patent Office / Office européen des brevets

(11) **EP 2 252 168 B1**

(12) **EUROPEAN PATENT SPECIFICATION**

(45) Date of publication and mention
of the grant of the patent:
**29.04.2015 Bulletin 2015/18**

(21) Application number: **09701956.6**

(22) Date of filing: **13.01.2009**

(51) Int Cl.:
*A23L 1/314* (2006.01)     *A23L 1/317* (2006.01)

(86) International application number:
**PCT/EP2009/000130**

(87) International publication number:
**WO 2009/090029 (23.07.2009 Gazette 2009/30)**

(54) **METHOD FOR PRODUCING SALAMIS AND SAUSAGES WITH LOW ANIMAL FAT CONTENT AND RELEVANT SALAMIS AND SAUSAGES**

VERFAHREN ZUR HERSTELLUNG VON SALAMIS UND WÜRSTEN MIT NIEDRIGEM TIERISCHEN FETTGEHALT, UND SOLCHE SALAMIS UND WÜRSTE

PROCÉDÉ DE FABRICATION DE SALAMIS ET DE SAUCISSES À FAIBLE TENEUR EN GRAISSES ANIMALES ET SALAMIS ET SAUCISSES AINSI OBTENUS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **14.01.2008 IT RM20080020**

(43) Date of publication of application:
**24.11.2010 Bulletin 2010/47**

(73) Proprietor: **Gramegna, Giangiuseppe**
**71036 Lucera (FG) (IT)**

(72) Inventors:
• **DEL NOBILE, Matteo, Alessandro**
**I-71043 Manfredonia (Foggia) (IT)**
• **CONTE, Amalia**
**I-71100 Foggia (IT)**
• **INCORONATO, Anna, Lucia**
**I-71036 Lucera (Foggia) (IT)**
• **PANZA, Olimpia**
**I-71043 Manfredonia (Foggia) (IT)**
• **SEVI, Agostino**
**I-71100 Foggia (IT)**

• **MARINO, Rosaria**
**I-71100 Foggia (IT)**

(74) Representative: **Freyria Fava, Cristina**
**Buzzi, Notaro & Antonielli d'Oulx**
**Via Maria Vittoria, 18**
**10123 Torino (IT)**

(56) References cited:
**EP-A- 0 787 436     EP-A- 1 642 507**
**FR-A- 2 608 900     US-B1- 6 749 884**

• **PANERAS E D ET AL: "VEGETABLE OILS REPLACE PORK BACKFAT FOR LOW-FAT FRANKFURTERS" JOURNAL OF FOOD SCIENCE, WILEY-BLACKWELL PUBLISHING, INC, US, vol. 59, no. 4, 1 July 1994 (1994-07-01), pages 725-728,733, XP000474120 ISSN: 0022-1147**
• **NOBILE M A DEL ET AL: "New strategies for reducing the pork back-fat content in typical Italian salami." MEAT SCIENCE, vol. 81, 2009, pages 263-269, XP002521421**

**Description**

Field of the invention

The present invention refers to a method for producing salamis and sausages products with low animal fat content and to salamis and sausages.

The term sausage is hereby meant to indicate finely chopped and seasoned meat, especially pork, usually stuffed into a prepared animal intestine or other casing and cooked or cured.

State of the art

Fermented sausages are a meat product, with high fat content, noticeable upon cutting the product. Commercial sausages usually contain up to 30% of fats. The pork fat used in fermented sausages is rich in saturated fatty acids and cholesterol. It has been demonstrated that high consumption of saturated fatty acids and cholesterol, is linked to the development of cardiovascular diseases. Therefore, health organisations worldwide promote strategies to reduce consumption of saturated fatty acids and cholesterol so as to counter risks related to cardiovascular diseases. The incidence of cardiovascular diseases is relatively low in the Mediterranean countries due to a diet rich in monounsaturated fats, such diet being based on olive oil.

Methods for reducing the amount of animal fat in salamis and sausages are disclosed i.a. in EP-A-1 642 507, FR-A-2 608 900, EP-A-0 787 436, US-B-6 749 884 and in Paneras et al., J. Food Sci. 1994:59(4), 725-728, 733, wherein the meat is mixed with vegetable fat.

There are various means of reducing the level of cholesterol of meat products. It is possible, for example, to replace fat with vegetable oils, water, without negative effects on the yield of the process, except for high replacement percentages. Olive oil, in particular, has been incorporated in various transformed meat products using various systems to withhold it in the meat paste. Olive oil is the most important monounsaturated vegetable oil. It contains 56.3 to 86.5% of monounsaturated fatty acids, 8 to 25% of saturated acids and 3.6 to 21.5% of polyunsaturated fatty acids. Furthermore, it is rich in polyphenols and tocopherols that operate as antioxidant compounds. Some researchers have demonstrated that olive oil has considerable beneficent effects on the metabolism of postprandial lipids and on thrombosis. Unfortunately, replacements of fat with oil indicated in the literature as the best solutions for producing salamis with low fat content never exceeds 40-50% of replacement. Using higher concentrations of oil caused problems connected with leakage of oil from the product, transudation of oil from the casing, inhibition of mould growth on the casing with negative impact on the salami seasoning process, detachment of the casing from the paste during both salami seasoning and cutting steps and hence disintegration of the seasoned product.

In the light of the considerations above, it is extremely important to produce salamis with a higher percentage of extra-virgin olive oil to replace animal fat, but without jeopardising the final characteristics of the of the seasoned product, in chemical, nutritional, microbiological and above all sensory terms.

Summary of the invention

Object of the invention is that of providing a method for producing salamis and sausages with low animal fat content.

Therefore, the present invention proposes to attain the objects outlined above by providing a method for producing salamis and sausages with low animal fat content, according to claim 1.

A further object of the present invention is that of providing salamis and sausages with low animal fat content.

Therefore, the present invention proposes to attain the objects outlined above by presenting salamis and sausages with low animal fat content according to claim 10.

According to another aspect of the invention, said product represents a valid alternative to traditional salamis and sausages due to its better nutritional profile and due to its enhanced softness and chewability.

The dependent claims describe preferred embodiments of the invention, forming an integral part of the present description.

Brief description of the Figures

Further features and advantages of the invention shall be clearer in light of the detailed description of a preferred but not exclusive embodiment of a method for producing salamis and sausages with low animal fat content as well as salamis and sausages. Results of tests performed on the products obtained through said method are illustrated with the help of the attached drawings in which:

Fig 1 shows a graph reporting the effects of oil replacement on pH during seasoning;

Fig 2 shows a graph reporting the effects of replacement with oil on lactic acid bacteria during seasoning;

Fig 3 shows a graph reporting the effects of replacement with oil on coliforms during seasoning;

Fig 4 shows a graph reporting the effects of replacement with oil on TBARS during seasoning

Detailed description of a preferred embodiment of the invention

The method according to the present invention comprises the following steps;

a. providing crumb obtained from a dough based on whey proteins or crumb from sandwich loaf;

b. soaking said crumb with vegetable food oil;

c. preparing a paste based on ground meat and/or animal fat comprising said crumb, wherein the percentage of crumb by weight of the paste weight amounts to at least 50%.

By the term "crumb" it is hereby meant the internal, soft part of a baked product, which can be bread or the product obtained by baking a dough based on whey proteins.
A preferred embodiment of said method comprises the following steps;

-  providing ground lean meat;

-  providing ground fat for an overall percentage by weight equivalent to 10%;

a. providing crumb obtained from a dough based on whey proteins or ground crumb of sandwich loaf;

b. soaking said crumb with vegetable food oil;

c. preparing a paste based on ground meat and/or animal fat comprising said crumb, wherein the percentage of crumb by weight of the paste weight amounts to at least 50%.

At the end of the operation according to the present process, next follows the packaging of a sausage and the respective seasoning.
The best embodiment of the method envisages that said vegetable oil is extra-virgin olive oil, but seed oil or the like can be used alternatively.
Furthermore, according to a preferred embodiment, the oil/crumb ratio is about 1 to 4, 1:4.
For a paste of about 5 kg overall, the crumb based on whey proteins is obtained from dough comprising approximately:

-  100 g whey proteins;

-  4 g NaCl;

-  10 g $Na_2CO_3$;

-  120 ml water.

The process for preparing the crumb based on whey proteins comprises the following steps:

-  mixing whey proteins, NaCl, $Na_2CO_3$ and water;

-  baking the mixture obtained in an oven;

-  grinding the crumb obtained from the baked dough.

Preferably, the ideal baking temperature is about 160°C for about 40-50 min.

In particular, regarding production of salamis, sodium chloride, pepper, fennel seeds, milk powder, food preservatives, such as E252, E301, as well as natural flavours, dextrose, sucrose can be added to the paste.

Still regarding a 5 kg product, the ideal doses are about:

- 26 g sodium chloride;

- 1 g pepper;

- 3 g fennel seeds;

- 12 g milk powder;

- overall 6 g of E252, E301, natural flavours, dextrose, sucrose.

Using natural casings, salamis of 200-250 g by weight and 3-3.5 cm in diameter each were obtained from the various pastes.

A sausage produced through the present method -and its variants - is capable of containing a percentage of vegetable fats, on the overall percentage of fats, exceeding 50%. In particular, it is preferred that said vegetable fats be represented by extra-virgin olive oil.

Some tests, shown hereinafter, were performed on four formulation examples of salamis and compared with a control formulation. In the specific case, below are some terms and the definitions thereof;

- Control: reference salami with 10% of pork fat;

- WP60: salami with 60% fat replaced by crumb from whey proteins in oil

- WP100; salami with 100% of fat replaced by crumb from whey proteins in oil

- PB60: salami with 60% fat replaced by crumb of sandwich loaf in oil

- PB100: salami with 100% fat replaced by crumb of sandwich loaf in oil

The salamis obtained were kept in a refrigerator at 4° C for 3 days; subsequently, they were placed for 20 days in a seasoning chamber where they remained under the following conditions: during the first 5 days the temperature was lowered from 25°C to 15°C and the Relative Humidity, hereinafter referred to as RH, was reduced from 90% to 65%. Lastly, the last seasoning step was performed at 13°C and 75-80% of RH. The samples of each type of salami were analysed on the following days: 0, 6, 8, 10, 13, 15, 17 and 22. The sensory, nutritional and mechanical properties were evaluated after the seasoning step, which corresponds, preferably, to the 22nd day.

**Measuring weight loss**

Three salami samples of each type were weighed before the salamis were transferred to the seasoning chamber. The same samples were weighed again on the analysis days and the weight drop was expressed as the percentage difference between the weight at the moment of analysis and the initial weight.

**Measuring the pH value**

10 g of each sample were mixed with 90 ml of peptone water using an instrument commercially referred to as Stomacher, and the pH of the homogenized product was measured using a pH-meter of the Crison Instrument, Barcelona, Spain.

**Microbiological analysis**

10 g of each sample were homogenized in a Stomacher with 90 ml of sterilized peptone water for 3 min. Sample dilutions were set up and inoculated on suitable media. The media and incubation conditions used were the following: DeMan Rogosa Sharpe Agar at 30° C for 48-72 hrs for lactic acid bacteria, Mannitol Salt Agar at 37° C for 24-48 hrs for *Micrococcaceae*, Violet Red Bile Agar at 37° C for 18-24 hrs for coliforms and Plate Count Agar at 30° C for 48 hrs for total bacterial count.

**Measuring colour**

Measuring operations regarding colours were performed using a Chroma Meter CR-400 manufactured by Konica Minolta, according to the standard conditions of the International Commission on Illumination. The samples were cut into 1 cm thick slices, placed on Petri dishes before taking measurements. The values were measured three times on the surface of the slice and the results were expressed as L*, which indicates brightness, a* which indicates red and b* which indicates yellow. Before each measuring operation, the instrument was calibrated using a white ceramic brick to obtain the following values Y = 93.0, x = 0.3134, y = 0.3193.

**Measuring the oxidation**

Lipid oxidation was measured by reacting thiobarbituric acid, hereinafter referred to as TBARS, according to the modified version of a method reported by Vyncke. 10 g of meat were homogenized with 30.00 ml of 7.5% trichloroacetic acid, hereinafter referred to as TCA, containing 0.1% of propyl gallate and 0.1 % of ethylenediaminetetraacetic acid, disodium salt and 1 ml of a sulphanilamide solution 0.5 g of which is sulphanilamide dissolved in about 40 ml of water, followed by the addition of 54 ml of concentrated hydrochloric acid and taken to a total volume of 100 ml of water. The meat homogenate with TCA was mixed for 45 sec at 13500 rpm, and filtered by means of a 0.42 $\mu$m Whatman filter. The extract of about 5.00 ml was mixed with 0.02 M thiobarbituric acid, i.e. 5.00 ml, and heated to 100° C for 40 min in water bath, followed by cooling in water and ice for 5 minutes. The absorbance was measured at 532 and 600 nm, using a spectrophotometer and the absorbance difference equivalent to A532nm - A600nm, was used for calculating the TBARS expressed in $\mu$mole of malonaldehyde / kg of meat. Malonaldehyde bis di-ethyl acetate was used as the standard.

**Nutritional analysis**

Humidity, proteins, lipids and ash contents in each sample were determined according to Association of Official Analytical Chemists method. The intramuscular fat of the meat was extracted according to the Folch method. In brief, samples of 5 g of homogenised meat were mixed with chloroform / methanol at a 2:1 volume ratio, twice for 60 sec, filtered, placed in a separation funnel and mixed with a 0.88% saline solution of KCL. After separating into two phases, the aqueous fraction of methanol was eliminated, while the lipid fraction in chloroform was washed with distilled water /methanol at a 1:1 volume ratio. After further filtration and evaporation by means of a rotating evaporator, the lipid extracts were transferred into test tubes for the subsequent gas chromatographic analysis. Two samples of chloroform extract, corresponding to 100 mg of lipids, were methylated by adding 1 ml of hexane and 0.05 ml of 2N methanolic KOH, according to IUPAC. The gas chromatographic analyses were performed using an instrument commercially referred to as Agilent 6890N provided with a CP - SIL 88 fused silica capillary column, having a length of 100 mm, internal diameter of 0.25 mm and film with thickness of 0.25 mm.

The operation conditions were as follows: a helium flow at a rate of 0.7 ml/min, FID detector at 260° C; a split/splitless injector at 220° C with an injection rate of 120 ml/min, and an injection volume of 1 ml. The temperature of the programmed column was: 4 min at 140°C and a subsequent increase at 220° C at 4° C/min. The retention time and the area of each peak were calculated using the gas chromatograph system software. The single peaks were identified by comparing their retention times with the standard times acquired from Sigma-Aldrich company. The results are expressed as a percentage of the total fatty acids analyzed and the average value of each fatty acid was used to calculate the total of the saturated fatty acids, referred to as SFA, monounsaturated, referred to as MUFA and polyunsaturated, referred to as PUFA. Atherogenic and thrombogenic indexes were calculated according to the Ulbricht and Southgate method as follows:

$$\text{Atherogenic Index-AI} = (C12{:}0 + 4 \times C14{:}0 + C16{:}0)/[(\textstyle\sum\text{MUFA} + \textstyle\sum\text{PUFA } (\omega\text{-}6) \text{ and } \omega\text{-}3)];$$

$$\text{Thrombogenic index} - \text{TI} = (C14{:}0 + C16{:}0 + C18{:}0) / [(0.5 \times \textstyle\sum\text{MUFA} + 0.5 \times \textstyle\sum\text{PUFA } (\omega\text{-}6) + 3 \times \textstyle\sum\text{PUFA } (\omega\text{-}3) + (\omega\text{-}3)/(\omega6)].$$

**Measuring mechanical properties**

Mechanical properties were tested using two different measuring instruments; ten parallelepipeds for each

sample of 1 cm$^2$ in section, were cut longitudinally with respect the salami. In both instrumental tests, an instrument commercially referred to as universal Instron 3343 was used. The cutting force was evaluated using a Warner - Bratzler device which measures the force, measured in kg, required for cutting the parallelepiped into halves, perpendicular to its length of 100 millimetres/minute using 100 kg of loading cell. The texture profile was analyzed using a modified accessory for determining the compression, which avoids the transverse extension of the samples. Each sample was subjected to two compression cycles at 80%. Data regarding the force over time were used to calculate the following parameters: hardness, cohesion, elasticity, gumminess and chewability. Five repetitions were performed for each instrumental test and the average of all the repetitions was used for statistical analysis.

**Sensory analysis**

A sensory panel made up of University of Foggia students, lecturers and staff, for a total of 80 people, was used for the sensory analysis. The evaluation was performed in single stands, located outside the sample preparation area, under incandescent red lighting filtered to avoid systematic errors due to the colour differences between potential samples. A random five-figured number was assigned to each sample, and five 1.5 mm thick slices taken from the respective different salamis were given to each consumer. Each member of the panel was provided with a glass of water, a non-salted cracker to clean the palate between the various tasting operations. Members of panel were asked to evaluate colour, odour and taste of each salami. The samples were evaluated according to their acceptability awarding points ranging from 1 - 9 of the hedonistic scale. Definitions corresponding to each full point were: 1; extremely unpleasant; 2, scarcely pleasant; 3, moderately pleasant; 4, slightly pleasant; 5, neither pleasant nor unpleasant; 6; a bit pleasant; 7, pleasant; 8, very pleasant; 9 extremely pleasant.

**Statistical analysis of experimental data**

Microbiological data were used as variables to perform the Cluster - XLstat 2007 analysis and discriminate between the Control and the other modified salamis. TBARS, nutritional, mechanical and sensory data were analysed using the GLM procedure of the SAS, 1999 statistical analysis system. When substantial differences were observed on $P<0.05$, unless otherwise specified, the t-Student test was performed using the PDIFF and STDERR options of SAS.

**Research results**

**Fat replacement effects on weight drop**

As indicated in the literature, salami loses weight during drying. Such loss depends on temperature and relative humidity of the seasoning chamber, on the air speed inside the chamber and on the seasoning time, on the mixing degree of the meat paste, on the width and on the material of which the casings are made, and lastly, on the amount of fats in the salami. In this work, results show that replacement of pork fat with extra-virgin oil does not cause substantial differences regarding weight loss. This is probably due to the fact that the oil trapped in the structure of the crumb, both made of whey proteins and sandwich loaf, does not prevent humidity from being released. On the other hand, other authors have demonstrated that direct incorporation of oil into the meat paste causes lower weight loss with respect to the Control, probably due to the fact that oil in this case covers each piece of meat in the paste entirely, thus preventing humidity from being released.

**Fat replacement effects on the pH**

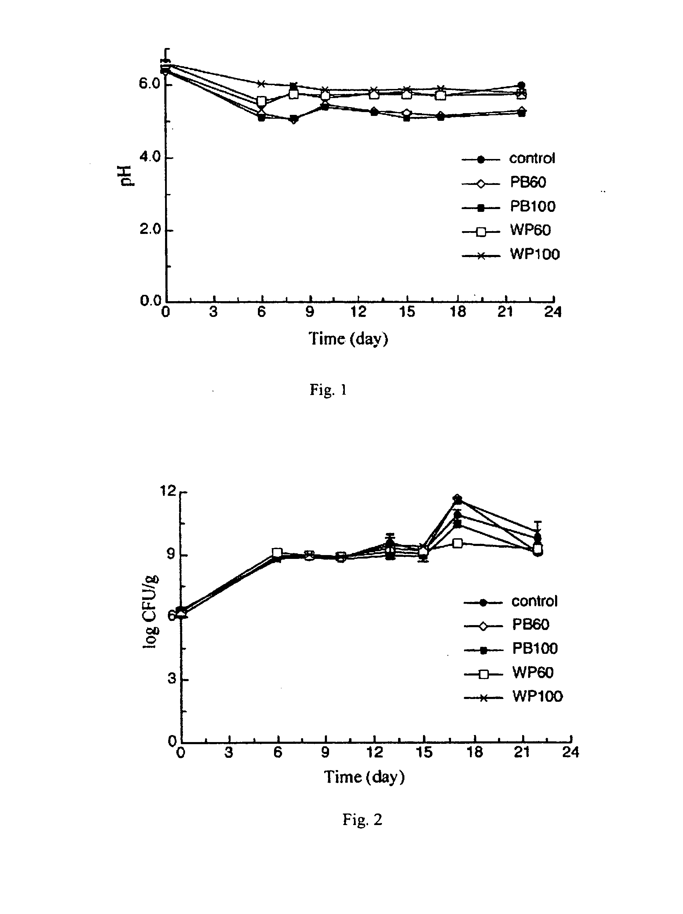

As shown in Figure 1, the initial salami pH was in the range between 6.35 and 6.65, while the final pH - 22 days later - was more or less about 5.00 for all samples. Other authors have observed a similar change of pH in fermented sausages containing 25% of fat, 10 and 20% of which had been replaced by olive oil as such or pre-emulsioned with soy proteins. This reduction of the pH may be due to the action of bacteria fermenting the carbohydrates present in salamis. According to other studies, organic acids, especially lactic acid, are formed in highly fermented sausages due to the breakage of carbohydrates during fermentation, and the pH drops below 5.30. Given that no differences were observed between pH values in the Control and in the modified salamis, it can be deduced that replacement of fat with oil had no impact on the pH during seasoning of salamis.

**Fat replacement effects on microbial count**

The fat level and the amount of soaked oil did not have any impact on the lactic acid bacterial count, as shown in figure 2, which increased by about 2 logarithm cycles during the first week and then they remained relatively constant, meaning that all the samples had reached the steady phase, probably due to lack of fermentescible carbohydrates. Similar results were also reported in the literature, where a correlation between lactic acid bacteria concentration and pH is discussed. As a matter of fact, during seasoning the salami microflora changes following the combined effects of pH, salt content and water activity, with the consequent increase of the lactic bacteria population. The high population of lactic bacteria inhibits growth of altering and pathogen microorganisms, in particular *Staphylococcus aureus.* Furthermore, it has been reported that lactic acid bacteria in food products have a positive effect on human health.

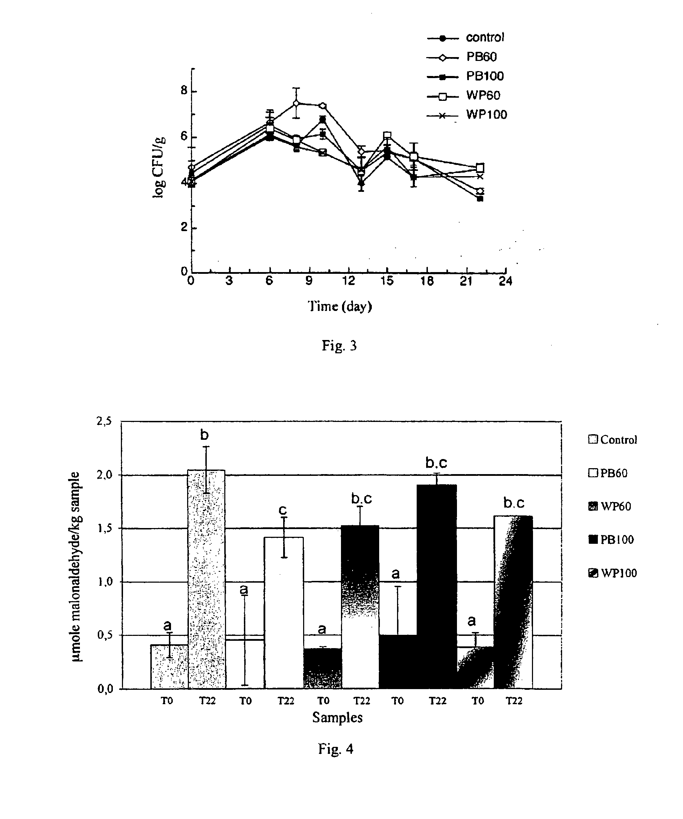

Figure 3 shows the trend of coliforms over time, for all the samples. The initial count of coliforms was about $10^5$UFC g-1; it increased over the first week and decreased during the final seasoning phase. This trend is inversely proportional to the growth of lactic acid bacteria, and this can be due to intrinsic salami factors. As reported in the literature, development of lactic acid bacteria suppresses the growth of coliforms due to the production of organic acids and antibacterial metabolites. Results suggest that there were no statistically relevant differences between the Control and the modified salamis, hence allowing concluding that replacement of the fat level had no impact on the growth of coliforms even in this case.

Regarding Micrococcaceae and total bacterial count, increases were observed only during the first seasoning phases, then the loads remained relatively constant up to the end of the seasoning, without substantial differences between the samples. Therefore, neither seasoning time nor replacement of pork fat with oil had a statistically relevant impact on the various microbial groups.

**Fat replacement effects on oxidation**

The initial level of oxidation was very low on all studied samples. As expectable, the TBARS values in the salami samples increased during the seasoning period. As deducible from the data indicated in figure 4, the incorporation of oil slightly lowered the TBARS values with respect to the Control, with differences that were not always statistically significant.

**Oil replacement effects on nutritional analysis**

The chemical composition of the studied products is indicated in Table 1. All parameters were significantly influenced by the type of salami; WP60 was the only sample that showed values similar to the Control, the other modified salamis were significantly different from each other. The lowest amount of humidity was observed on the Control, while the highest humidity was observed in the PB100 sample with a significance of P<0.01. Other authors observed that partial replacement of pork fat with olive oil determined lower humidity content and higher weight loss with respect to the Control, while others observed that the salami with the highest fat replacement level showed higher water content with respect to the Control.

Table 1

| Percentage salami chemical composition, means $\pm$ standard error of the mean SEM | | | | | | | |
|---|---|---|---|---|---|---|---|
| | Control | 100%P | 60%P | 100%WP | 60%WP | SEM | Effects-P |
| Humidity | 26.01 d | 37.40 a | 31.11 b | 28,39 c | 27.50 cd | 0,52 | ** |
| Fats | 27.98 b | 25.99 c | 223.64 d | 29.84 a | 28.26 b | 0,48 | *** |
| Proteins | 38.52 a | 30.88 c | 38.48 a | 34.92 b | 37.42 a | 0,38 | ** |
| Ashes | 7.49 a | 5.73 b | 6.77 a | 6.85 a | 6.73 a | 0,26 | * |
| *P<0.05; ** = P<0.01; *** = P<0.001. | | | | | | | |

Replacement of fat with oil led to a reduction of the fat content with a significance of P<0.001 only in PB60 and PB100, while WP100 showed a higher value with respect to the Control. The protein content was higher in the Control and in WP60 and PB60 with respect to WP100 and PB100 with a significance of P<0.01. The ash content was not influenced by the treatment unless in the case of PB100 which showed the lowest value with a significance of P<0.05. Table 2 shows the profile of fatty acids of the lipid fraction of each processed product.

Table 2

| Percentage salami fatty acids composition, means $\pm$ standard error of the mean SEM | | | | | | | |
|---|---|---|---|---|---|---|---|
| | Control | 100%P | 60%P | 100%WP | 60%WP | SEM | Effects-P |
| C14:0 myristic | 1,38 a | 0,68 c | 0,85 b | 0,61 c | 0,92 b | 0,05 | ** |
| C16:0 palmitic | 24,70 a | 17,26 d | 19,59 b | 17,08 d | 18,92 c | 0,31 | *** |
| C18:0 stearic | 14,08 a | 8,56 c | 9,67 b | 7,23 d | 9,22 bc | 0,25 | * |
| C20:0 arachidic | 0,20 c | 0,31 b | 0,28 b | 0,33 b | 0,27 b | 0,02 | * |
| C16:1 palmitoleic | 2,61 a | 1,73 c | 2,03 b | 1,6 c | 2,09 b | 0,06 | ** |
| C18:1$\omega$9 oleic | 43,06 d | 60,74 b | 55,2 c | 62.63 a | 55,81 c | 0,62 | ** |
| | | | | | | | |
| C20:1 gadoleic | 0,87 a | 0,6 bc | 0,66 b | 0,6 bc | 0,72 b | 0,03 | * |
| C18:2$\omega$6, linoleic | 11,18 a | 8,74 c | 10,05 b | 8,66 c | 10,51 b | 0,11 | ** |
| C20:2$\omega$6 | 0,52 a | 0,27 c | 0,38 b | 0,22 c | 0,37 b | 0,02 | ** |
| C20:4$\omega$6 arachidonic | 0,40 a | 0,27 b | 0.35 a | 0,23 b | 0,28 b | 0,01 | ** |
| C18:3$\omega$3 linolenic | 0,84 a | 0,74 b | 0,82 a | 0,74 b | 0,79 ab | 0,02 | * |
| C20:5,$\omega$3 eicosapentoic | 0,02 | 0,01 | 0,05 | 0,01 | 0,01 | 0,01 | NS |
| C22:6,$\omega$3 docosehaxanoic | 0,13 a | 0,08 bc | 0,09 b | 0.05 c | 0,08 bc | 0,01 | * |
| | | | | | | | |
| SFA | 40,37 a | 26,81 c | 30,39 b | 25,26 c | 29,33 b | 0,540 | *** |
| MUFA | 46,54 c | 63,07 a | 57,87 b | 64,84 a | 58,62 b | 0,72 | ** |
| PUFA | 13,09 a | 10,12 c | 11,74 b | 9,90 c | 12,03 b | 0,25 | ** |
| n6 | 12,1 a | 9,28 c | 10,78 b | 9,11 c | 11,16 b | 0,18 | ** |
| n3 | 0,99 a | 0,83 b | 0,96 a | 0.8 b | 0.87 ab | 0.04 | * |
| NS = Not-significant, *P<0.05,; **=P<0.01; ***=P<0.001. | | | | | | | |

The total amount of saturated fatty acids, SFA, decreased with a significance of P<0.001 from 40.37% of the total fatty acids in the Control to 26.03% of the total fatty acids in WP100 and PB100. The drop of the SFAs fraction was primarily caused by palmitic and stearic acids which are abundant in pork fat. Furthermore, the Control showed a higher percentage of myristic acid C14:0; with a significance of P<0.01; palmitic acid C16:0; with a significance of P<0.001 and stearic acid C18:0; with a significance of P<0.05. Arichidic acid was the only one that showed a substantial increase with respect to the Control; however, it is present in a very low amount. Variation of the profile of the fraction of saturated fatty acids has a beneficial effect considering the reduction of the total sum of SFA, especially such as palmitic and myristic which have shown to be hyperlipidemic. As expected, salamis with 100% replacement of fat with oil, i.e. WP100 and PB100 have shown higher MUFA content, with a significance of P<0.001, with respect both to the Control and the salamis treated with 60% of oil i.e. WP60, PB60.

The substantial increase of the fraction of monounsaturated fats was primarily caused by oleic acid which has shown a progressive increase with a significance of P<0.01, moving from the Control to WP100 and PB100, from 43.06% of the total fatty acids in the Control to 61.68% of the total fatty acids in salamis with 100% of oil. Oleic acid was signalled as a hypolipidemic substance, reducing both plasma cholesterol and triglycerides.

Modified salamis showed a lower amount of linoleic acid with respect to the Control with a significance of P<0.01. In particular, samples with 100% of oil showed lower values, causing a progressive increase with a significance of P<0.01 of the total $\omega$ 6 fatty acids and of the PUFA fraction from 100% oil to the Control. The total of the $\omega$ 3 fatty acids was higher in the Control with respect to all the other treated samples with a significance of P<0.05. Replacement of fat with 60% and 100% of oil has markedly influenced the nutritional indexes and the PUFA/SFA ratio, as illustrated in Table 3, providing benefits from a nutritional point of view. As a matter of fact, in all modified salamis, the atherogenic and thrombogenic indexes showed lower values, while the PUFA/SFA ratio, in all modified salamis, showed a higher value with respect to the Control, except for PB100. Though the meat PUFA/SFA ratio is an important factor under the human nutrition point of view, nutritionists have recently focused their attention on the type of PUFA and on the diet balance between $\omega$ 3 PUFA made up of linolenic acid C18:3$\omega$3, and $\omega$6 PUFA made up of linoleic acid C18:2$\omega$6. The AI value was calculated to evaluate the risk of atherosclerosis and the TI value was calculated as sign of potential platelet aggregation. From a nutritional point of view, modified salamis showed a better profile of fatty acids due to the low atherogenic and thrombogenic indexes, alongside a higher PUFA/SFA ratio.

Table 3

**Nutritional indexes and salami fatty acids ratio, means ± standard error of the mean SEM**

|  | Control | 100%P | 60%P | 100%WP | 60%WP | SEM | Effects-P |
|---|---|---|---|---|---|---|---|
| AI | 0.51 a | 0,27 b | 0,33 b | 0.26 b | 0,32 b | 0,04 | *** |
| TI | 1,35 a | 0,72 b | 0,87 b | 0,67 b | 0,82 b | 0,07 | ** |
| P/S | 0,32 b | 0,38 ab | 0,39 a | 0.39 a | 0,41 a | 0,02 | ** |

**=P< 0,01; ***= P< 0,001.

**Fat replacement effects on mechanical properties**

Table 4 shows the results obtained from the mechanical properties for the Control and for all the other salami formulations. The Control showed the highest values for WBS, with a significance of P<0.05, hardness with significance of P<0.01, cohesion with significance of P<0.05, gumminess P<0.01 and chewability, with significance of P<0.05. In previous researches, partial replacement of fat with oil gave forthdifferent results. Some authors observed that fermented sausages, obtained by adding oil, are softer with respect to the Control if addition of oil occurred in liquid form, while no differences were observed in the structure if the addition was performed as a pre-emulsion of soy protein. On the contrary, other authors observed lower values regarding hardness in the Pamplona Chorizo, produced using pre-emulsified olive oil. In the present research, replacement of fat with crumb obtained from whey proteins, i.e. WP60 - WP100 salamis or from sandwich loaf, i.e. PB60 - PB100 salamis soaked with oil, led to a considerable variation of the WBS and of the texture parameters, yielding lower values in all modified salamis.

Table 4

**WBS and salami texture profile analysis means ± standard error of the mean SEM**

|  |  | Control | 100%P | 60%P | 100%WP | 60%WP | SEM | Effects-P |
|---|---|---|---|---|---|---|---|---|
| Warmer-bratzler shear force | kg/cm$^2$ | 4,62 a | 3.78 b | 3,81 b | 3,31 c | 3,59 bc | 0,14 | * |
| hardness | kg | 9,98 a | 5,71 c | 8,39 b | 4,15 d | 7,54 b | 0,32 | ** |
| Cohesion |  | 0,25 a | 0,17 c | 0,15 c | 0,20 b | 0,16 c | 0,01 | * |
| Elasticity | mm | 6,58 d | 7,91 a | 7,14 c | 7,32 b | 7,17 bc | 0,048 | *** |
| Gumminess | kg | 2,50 a | 0,97 c | 1,22 b | 0,84 c | 1,21 b | 0,06 | ** |
| Chewability | kg*mm | 16,42 a | 7.70 c | 8,70 b | 6,18 c | 8,65 b | 0.30 | * |

* = P< 0.05:** P< 0,01; ***P<0.001

**Fat replacement effects on sensory properties and colour**

Oil percentage also influenced the sensory parameters of colour, odour and taste, as illustrated in Table 5. In salamis produced with 100% oil, lower sensory values were observed, with a significance of P<0.001, both with respect to the Control and to the salamis with 60% of oil. These products were difficult to slice and the casings detached from the meat. The difference between the Control and samples WP60 and PB60 was lower and not significant in terms of colour and odour, while much lower points were assigned to PB60 in terms of taste. Hence, data indicated that the WP60 salami sample is the one that showed sensory characteristics more similar with respect to the commercial salamis.

Table 5

**Points on salami sensory analysis, means ± standard error of the mean SEM**

|  | Control | 100% P | 60% P | 100% WP | 60% WP | SEM | Effects-P |
|---|---|---|---|---|---|---|---|
| Colour | 7.18 a | 6,31 b | 7,31 a | 5,93 b | 6,89 ab | 0,19 | *** |
| Odour | 7,03 a | 6,00 b | 6.65 a | 5,84 b | 6,67 a | 0,22 | *** |
| Flavour | 7,07 a | 5,61 c | 6,38 b | 5.68 c | 6.57 ah | 0,22 | *** |

***P< 0,001

Table 6 shows the values obtained from analysing the colour in the control and modified products. The fat replacement effect on the colorimetric parameters was not as clear as in the case of other quality indexes due to lack of salami homogeneity. However, it is interesting to observe that the WP100 sample showed a lower brightness value just like it occurred in sensory analysis. No significant difference was observed on the other two indexes taken into account.

Table 6

Colorimetric parameters Salami brightness L*; red index a*; yellow index b*, means $\pm$ standard error of the mean SEM

| | Control | 100%P | 60%P | 100%WP | 60%P | SEM | Effects-P |
|---|---|---|---|---|---|---|---|
| L* | 45,70 a | 44,56 a | 43,61 ab | 40,39 b | 45,07 a | 1,17 | * |
| a* | 7,99 | 10,13 | 9,16 | 8,44 | 9,96 | 0,73 | NS |
| b* | 2,58 | 4,37 | 3,46 | 4,82 | 4,91 | 0,78 | NS |
| NS = Not significant ; * = P< 0.05, | | | | | | | |

Advantageously, the invention in question allows producing pork meat salamis partially or entirely free of fat, replaced by extra-virgin olive oil. In order to withhold the oil in the meat paste, a method based on using crumb based on whey proteins or based on using crumb of sandwich loaf was proposed. As a matter of fact, this method was used to produce a nutritionally healthier food product, with a better fatty acids profile and sensory quality highly comparable to that of traditional salamis. Total or partial replacement of animal fat with vegetable fat allows obtaining nonconventional sausage products which, though maintaining the distinctive quality characteristics of traditional products, may have a wider market, for example due to easier chewability, useful for the elderly. Furthermore, consumption of sausages thus obtained, is suitable for use also by other ethnic groups and populations from different religions that do not admit use of particular types of meat.

The particular embodiments herein described do not limit the contents of this application covering all the variants of the invention defined in the claims.

**Claims**

1. A method for producing salamis and sausages with low fat content, comprising the following steps:

   a. providing crumb obtained from a dough based on whey proteins or ground crumb of sandwich loaf;
   b. soaking said crumb with vegetable food oil;
   c. preparing a paste based on ground meat and/or animal fat comprising said crumb, wherein the percentage of crumb by weight of the paste weight is equal or higher than 50%, wherein the step of providing crumb obtained from a dough based on whey proteins comprises the following sub-steps: - mixing whey proteins, NaCl, $Na_2CO_3$ and water; - baking the mixture obtained in an oven; - grinding the baked mixture.

2. A method according to claim 1, wherein

   - the ground fat represents a percentage by weight of the overall weight equivalent to 10%;
   - the crumb is obtained from a dough based on whey proteins or is obtained from ground crumb of sandwich loaf;

3. A method according to claim 1, wherein for 5 kg of said salami or sausage, said dough comprises about:

   - 100 g whey proteins;
   - 4 g NaCl;
   - 10 g $Na_2CO_3$;
   - 120 ml water.

4. A method according to claim 1, wherein the baking in oven is carried out at about 160°C for about 40-50 min.

5. A method according to claim 1, Further comprising a step wherein sodium chloride and/or pepper and/or fennel seeds and/or milk powder and/or food preservatives and/or natural flavours and/or dextrose and/or sucrose are added to the paste or to the mixture.

6. A method according to claim 5, wherein said food preservatives are E252 and/or E301.

7. A method according to claim 5, wherein the doses are about;

- 26 g sodium chloride;
- 1 g pepper;
- 3 g fennel seeds;
- 12 g milk powder;
- overall 6 g of E252, E301, natural flavours, dextrose, sucrose.

8. A method according to claim 5, wherein soaking of the crumb in oil has an oil/crumb ratio of about 1 to 4 (1:4) by weight.

9. A method according to claims 1 or 2, wherein said vegetable oil is extra-virgin olive oil and/or seed soil and/or the like.

10. A salami or sausage with low fat content **characterized in that** it comprises vegetable fats in percentages higher than 50% with respect to the overall fat content, wherein the vegetable oil is withheld by means of ground crumb obtained from dough based on whey proteins, or sandwich loaf.

11. A salami or sausage product according to claims 10, comprising NaCl, $Na_2CO_3$ and water.

12. A salami or sausage according to claim 11, wherein the ideal doses of said dough are:

- 100 g whey proteins;
- 4 g NaCl;
- 10 g $Na_2CO_3$;
- 120 ml water;

for each 500 g of salami or sausage.

13. A salami or sausage according to claim 10, further comprising sodium chloride and/or pepper and/or fennel seeds and/or milk powder and/or food preservatives and/or natural flavors and/or dextrose and/or sucrose.

14. A salami or sausage according to claim 13, comprising:

- 26 g sodium chloride;
- 1 g pepper;
- 3 g fennel seeds;
- 12 g milk powder;
- overall 6 g of E252, E301, natural flavours, dextrose, sucrose;

for each 500 g of salami or sausage.

15. A salami or sausage according to the preceding claims 10 to 14, wherein said vegetable oil is extra-virgin olive oil and/or seeds oil.

**Patentansprüche**

1. Verfahren zum Herstellen von Salamis und Würsten mit niedrigem Fettgehalt, umfassend die folgenden Schritte:

a. Bereitstellen von Krümeln, die aus einem Teig auf der Basis von Molkenproteinen erhalten werden, oder gemahlenen Toastbrotkrümeln;
b. Tränken der Krümel mit pflanzlichem Speiseöl;
c. Herstellen eines Teigs auf der Basis von gemahlenem Fleisch und/oder tierischem Fett umfassend die Krümel, wobei der Gewichtsprozentsatz der Krümel, bezogen auf das Gewicht der Paste, gleich oder höher als 50 % ist, wobei der Schritt des Bereitstellens von Krümeln, die aus einem Teig auf der Basis von Molkenproteinen erhalten werden, die folgenden Teilschritte umfasst:

- Mischen von Molkenproteinen, NaCl, $Na_2CO_3$ und Wasser;
- Backen der erhaltenen Mischung in einem Ofen;
- Mahlen der gebackenen Mischung.

**2.** Verfahren nach Anspruch 1, wobei

- das gemahlene Fett einen Gewichtsprozentsatz, bezogen auf das Gesamtgewicht, gleich 10 % darstellt;
- die Krümel aus einem Teig auf der Basis von Molkenproteinen erhalten werden oder aus gemahlenem Toastbrotkrümeln erhalten werden.

**3.** Verfahren nach Anspruch 1, wobei für 5 kg der Salami oder Wurst der Teig ungefähr umfasst:

- 100 g Molkenproteine;
- 4 g NaCl;
- 10 g $Na_2CO_3$;
- 120 ml Wasser.

**4.** Verfahren nach Anspruch 1, wobei das Backen in einem Ofen bei ungefähr 160 °C während ungefähr 40-50 min durchgeführt wird.

**5.** Verfahren nach Anspruch 1, außerdem umfassend einen Schritt, bei dem Natriumchlorid und/oder Pfeffer und/oder Fenchelsamen und/oder Milchpulver und/oder Lebensmittelkonservierungsstoffe und/oder natürliche Aromen und/oder Dextrose und/oder Saccharose zu dem Teig oder zu der Mischung zugegeben werden.

**6.** Verfahren nach Anspruch 5, wobei die Lebensmittelkonservierungsstoffe E252 und/oder E301 sind.

**7.** Verfahren nach Anspruch 5, wobei die Dosen ungefähr folgende sind:

- 26 g Natriumchlorid;
- 1 g Pfeffer;
- 3 g Fenchelsamen;
- 12 g Milchpulver;
- insgesamt 6 g von E252, E301, natürlichen Aromen, Dextrose, Saccharose.

**8.** Verfahren nach Anspruch 5, wobei das Tränken der Krümel in Öl ein Öl/Krümel-Verhältnis von ungefähr 1 zu 4 (1:4), bezogen auf das Gewicht, aufweist.

**9.** Verfahren nach den Ansprüchen 1 oder 2, wobei das pflanzliche Öl natives Olivenöl extra und/oder Samenöl und/oder dergleichen ist.

**10.** Salami oder Wurst mit niedrigem Fettgehalt, **dadurch gekennzeichnet, dass** sie pflanzliche Fette in Prozentsätzen, bezogen auf den Gesamtfettgehalt, umfasst, die höher als 50 % sind, wobei das pflanzliche Öl mittels gemahlenen Krümeln zurückgehalten wird, die aus Teig auf der Basis von Molkenproteinen oder Toastbrot erhalten werden.

**11.** Salami oder Wurstprodukt nach Anspruch 10, umfassend NaCl, $Na_2CO_3$ und Wasser.

**12.** Salami oder Wurst nach Anspruch 11, wobei die idealen Dosen des Teiges folgende sind:

- 100 g Molkenproteine;
- 4 g NaCl;
- 10 g $Na_2CO_3$;
- 120 ml Wasser;

für jeweils 500 g Salami oder Wurst.

**13.** Salami oder Wurst nach Anspruch 10, außerdem umfassend Natriumchlorid und/oder Pfeffer und/oder Fenchelsamen und/oder Milchpulver und/oder Lebensmittelkonservierungsstoffe und/oder natürliche Aromen und/oder Dextrose und/oder Saccharose.

**14.** Salami oder Wurst nach Anspruch 13, umfassend:

- 26 g Natriumchlorid;

- 1 g Pfeffer;
- 3 g Fenchelsamen;
- 12 g Milchpulver;
- insgesamt 6 g von E252, E301, natürlichen Aromen, Dextrose, Saccharose;

für jeweils 500 g Salami oder Wurst.

**15.** Salami oder Wurst nach den vorangehenden Ansprüchen 10 bis 14, wobei das pflanzliche Öl natives Olivenöl extra und/oder Samenöl ist.

**Revendications**

**1.** Procédé de production de salamis et de saucisses à faible teneur en matière grasse, comprenant les étapes suivantes :

a. fournir une mie obtenue à partir d'une pâte à base de protéines de lactosérum ou de mie broyée de pain de mie ;
b. tremper ladite mie avec de l'huile alimentaire végétale ;
c. préparer une pâte à base de viande hachée et/ou de matière grasse animale comprenant ladite mie, où le pourcentage de mie en poids par rapport au poids de pâte est supérieur ou égal à 50%, où l'étape consistant à fournir une mie obtenue à partir d'une pâte à base de protéines de lactosérum comprend les sous-étapes suivantes :

- mélanger des protéines de lactosérum, du NaCl, du $Na_2CO_3$ et de l'eau ;
- cuire le mélange obtenu dans un four ;
- broyer le mélange cuit.

**2.** Procédé selon la revendication 1, dans lequel

- la matière grasse broyée représente un pourcentage en poids par rapport au poids total équivalent à 10% ;
- la mie est obtenue à partir d'une pâte à base de protéines de lactosérum ou est obtenue à partir de mie broyée de pain de mie;

**3.** Procédé selon la revendication 1, dans lequel, pour 5 kg dudit salami ou de ladite saucisse, ladite pâte comprend environ :

- 100 g de protéines de lactosérum ;
- 4 g de NaCl ;
- 10 g de $Na_2CO_3$ ;
- 120 ml d'eau.

**4.** Procédé selon la revendication 1, dans lequel la cuisson au four est effectuée à environ 160°C pendant environ 40 à 50 min.

**5.** Procédé selon la revendication 1, comprenant en outre une étape où le chlorure de sodium et/ou du poivre et/ou des graines de fenouil et/ou du lait en poudre et/ou des conservateurs alimentaires et/ou des arômes naturels et/ou du dextrose et/ou du saccharose sont ajoutés à la pâte ou au mélange.

**6.** Procédé selon la revendication 5, dans lequel lesdits conservateurs alimentaires sont E252 et/ou E301.

**7.** Procédé selon la revendication 5, dans lequel les doses sont d'environ ;

- 26 g de chlorure de sodium ;
- 1 g de poivre;
- 3 g de graines de fenouil ;
- 12 g de lait en poudre ;
- dans l'ensemble 6 g de E252, de E301, d'arômes naturels, de dextrose, de saccharose.

**8.** Procédé selon la revendication 5, dans lequel le trempage de la mie dans l'huile a un rapport huile/mie d'environ 1 sur 4 (1 : 4) en poids.

**9.** Procédé selon la revendication 1 ou 2, dans lequel ladite huile végétale est l'huile d'olive vierge extra et/ou l'huile d'oléagineux et/ou autres analogues.

**10.** Salami ou saucisse à faible teneur en matière grasse caractérisé(e) en ce qu'il/elle comprend des matières grasses végétales dans des pourcentages supérieurs à 50% par rapport à la teneur en matière grasse totale, où l'huile végétale est retenue au moyen de la mie broyée obtenue à partir d'une pâte à base de protéines de lactosérum, ou de pain de mie.

**11.** Produit de salami ou de saucisse selon la revendication 10, comprenant du NaCl, du $Na_2CO_3$ et de l'eau.

**12.** Salami ou saucisse selon la revendication 11, où les doses idéales de ladite pâte sont :

- 100 g de protéines de lactosérum ;
- 4 g de NaCl ;
- 10g de $Na_2CO_3$ ;
- 120 ml d'eau ;

pour chaque 500 g de salami ou de saucisse.

**13.** Salami ou saucisse selon la revendication 10, comprenant en outre du chlorure de sodium et/ou du poivre et/ou des graines de fenouil et/ou du lait en poudre et/ou des conservateurs alimentaires et/ou des arômes naturels et/ou du dextrose et/ou du saccharose.

**14.** Salami ou saucisse selon la revendication 13, comprenant :

- 26 g de chlorure de sodium ;
- 1 g de poivre ;
- 3 g de graines de fenouil ;
- 12 g de lait en poudre ;
- dans l'ensemble 6 g de E252, de E301, d'arômes naturels, de dextrose, de saccharose ;

pour chaque 500 g de salami ou de saucisse.

**15.** Salami ou saucisse selon les revendications précédentes 10 à 14, où ladite huile végétale est l'huile d'olive vierge extra et/ou l'huile d'oléagineux.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1642507 A
- FR 2608900 A

- EP 0787436 A
- US 6749884 B

**Non-patent literature cited in the description**

- **PANERAS et al.** *J. Food Sci.,* 1994, vol. 59 (4), 725-728, 733